# EUROPÄISCHE PATENTSCHRIFT

(11) **EP 0 990 757 B1**
(45) Veröffentlichungstag und Bekanntmachung des Hinweises auf die Patenterteilung: **25.11.2009**
(21) Anmeldenummer: 99118924.2
(22) Anmeldetag: 25.09.1999
(51) Int. Cl.: E05B 49/00, B60R 25/04, G07C 9/00

(54) **Vorrichtung für Kraftfahrzeuge zur Benutzeridentifikation**
Motor vehicles device for user identification
Dispositif pour véhicules automobiles destiné à l'identification d'utilisateurs

(30) Priorität: 30.09.1998 DE 19844867
(43) Veröffentlichungstag der Anmeldung: 05.04.2000
(73) Patentinhaber: ADAM OPEL AG, 65423 Rüsselsheim (DE)
(72) Erfinder: Nix, Axel, Dipl.-Ing., 65193 Wiesbaden (DE)
(74) Vertreter: Daniel, Ulrich W.P.

(56) Entgegenhaltungen:
- EP-A- 0 475 356
- EP-A- 0 523 602
- DE-C- 19 711 901
- FR-A- 2 749 607

## Beschreibung

Die Erfindung bezieht sich auf eine Vorrichtung nach dem Oberbegriff des Patentanspruchs 1, wie sie beispielsweise aus der DE 41 23 654 A1 bekannt ist. Ein Transponder ist mit einer Sende-/Empfangseinheit zur Transponder-Fahrzeug-Kommunikation ausgestattet, so dass eine Kontrolle der Zugangsberechtigung möglich ist. Des Weiteren sind Mittel vorgesehen, die es gestatten, festzustellen, ob sich der Transponder innerhalb oder außerhalb des Fahrzeuginnenraumes befindet. Bei der Lösung nach DE 41 23 654 A1 soll ein Verriegeln des Fahrzeugs erst möglich sein, wenn sich der Transponder außerhalb des Fahrzeugs befindet. Zur Erkennung der Position des Transponders wird die Feldstärke der codierten Transpondersignale ausgewertet. Es sind zwei Antennen am Fahrzeug vorzusehen, über die Signale zu empfangen sind, was einen relativ hohen Aufwand und auch Störanfälligkeit mit sich bringt. Verwiesen wird in diesem Zusammenhang auch auf die EP 0 475 356 A1 und die DE 197 35 658 C1.

Im Normalfall findet die Transponder-Fahrzeug-Kommunikation nur zwischen der Sende-/Empfangseinheit des Transponders und einer Empfangs-/Sendeeinheit im Fahrzeuginnenraum statt. Codierte Transpondersignale sollen ausreichend stark im Fahrzeug empfangen werden, was bei den heute üblichen Funksendern-/empfängern auch gegeben ist. Werden diese Signale zusätzlich auch im Hinblick auf ihre Feldstärke ausgewertet, beansprucht dies Rechenzeit und beeinträchtigt die eigentliche Benutzeridentifikation negativ. Die im Fahrzeug empfangbare Feldstärke ist von der Fahrzeugausstattung und vom Zustand des Fahrzeugs (Türen auf/zu etc.) abhängig. Die Innen-/Außenerkennung muss fahrzeugspezifisch erfolgen, was aufwendig ist.

Es ist Aufgabe der Erfindung, mit geringem Aufwand eine selbsttätig arbeitende Vorrichtung zu schaffen, mit Hilfe derer eine sichere Benutzeridentifikation und eine sichere Erkennung der Position des Transponders erfolgen kann, womit es möglich werden soll, nach erfolgreicher Benutzeridentifikation variabel bestimmte Funktionen zu schalten.

Zur Lösung dieser Aufgabe zeichnet sich die erfindungsgemäße Vorrichtung durch die im Patentanspruch 1 angegebenen Merkmale aus. Einzelheiten der Erfindung ergeben sich aus den Patentansprüchen 2 bis 6.

Ein Transponder ist in herkömmlicher Weise mit einer Sende-/Empfangseinheit für die Benutzeridentifikation ausgestattet. Mittels dieser Einheit findet eine Funk-Kommunikation zwischen Transponder und Fahrzeug (zugehörige Empfangs-/Sendeeinheit des Fahrzeugs) statt. Diese Signale werden nicht in die Analyse der Lage des Transponders einbezogen, da sie nicht wesentlich von der Fahrzeugkarosserie beeinflusst werden.

Transponderseitig ist zusätzlich eine Ultraschall-Sendeeinrichtung oder -Empfangseinrichtung vorgesehen. Gleichfalls ist im Fahrzeuginnenraum eine Ultraschall-Empfangseinrichtung oder -Sendeeinrichtung anzuordnen. Von der Transponder-Sendeeinrichtung bzw. von der Fahrzeug-Sendeeinrichtung wird Ultraschall ausgesendet, in einer Stärke, dass die fahrzeug- bzw. transponderseitige Empfangseinrichtung diesen nur dann in ausreichend starkem Maße empfängt, wenn sich der Transponder im Fahrzeuginnenraum befindet. Die Fahrzeugkarosserie bildet eine sehr gute Abschirmung für Ultraschall. Unabhängig vom Zustand der Fenster oder eines Schiebedaches tritt eine ganz erhebliche Minderung des empfangbaren Ultraschalls ein, wenn der Transponder aus der Karosserie heraus bewegt wird. Damit ist hier keine Feldstärkeauswertung nötig, sondern nur eine Untersuchung, ob Ultraschall empfangbar ist, oder nicht. Da diese Funktion unabhängig von der Benutzeridentifikation ausgeübt wird, kann diese auch nicht negativ beeinträchtigt werden.

Von Vorteil ist, wenn als Ultraschall-Empfangseinrichtung oder -Sendeeinrichtung eine im Fahrzeug bereits vorhandene Einrichtung genutzt wird. Bekannte Diebstahlwarnanlagen erfassen mittels Ultraschall Veränderungen im Fahrzeuginnenraum, wozu bereits Ultraschall-Sende-/Empfangseinrichtungen vorgesehen sind. Es kann damit auch ein Signal vom Transponder empfangen bzw. an diesen abgegeben werden.

Es bestehen zwei Möglichkeiten zur Realisierung der Erfindung:
1. Der Transponder sendet ein Ultraschallsignal, welches im Fahrzeug empfangbar ist, oder nicht, oder
2. im Fahrzeug werden Ultraschallsignale ausgesendet, die der Transponder empfängt oder nicht.

Im ersten Fall kann das Ultraschallsignal gleichzeitig mit Signalen zur Benutzeridentifikation ausgesendet werden, so dass die Benutzeridentifikation und die Analyse der Transponderposition gleichzeitig stattfinden kann. Im zweiten Fall können Ultraschallsignale im Fahrzeug beispielsweise ständig abgegeben werden. Bei der Absendung des Benutzeridentifikationssignals vom Transponder aus enthält dieses dann bereits eine Information, ob am Transponder ein Ultraschall empfangen wird, oder nicht.

Die Ultraschallsignale können codierte Informationen enthalten. Beispielsweise kann eine Information, die die Zugehörigkeit des Ultraschallsignals zum Benutzeridentifikationssignal belegt, enthalten sein.

Somit ist eine sehr sichere, die Benutzeridentifikation nicht störende Möglichkeit gegeben, zu erkennen, ob sich der Transponder innerhalb oder außerhalb des Fahrzeugs befindet.

Die Sendeleistung der Ultraschall-Sendeeinrichtung kann an die Ausstattung des Fahrzeugs angepasst werden, so dass die Funktion der Vorrichtung ausstattungsunabhängig gegeben ist. Beispielsweise kann die Sendeleistung bei Ausstattung mit Ledersitzen geringer sein, als bei vorhandenen Stoffbezügen, da hier ein stark differierendes Reflextionsverhalten vorliegt.

Je nach Ausführung der Erfindung kann die Ultraschall-Sende-/Empfangseinrichtung selbsttätig aktiviert werden, wenn die Transponder-Fahrzeug-Kommunikation beginnt. Somit ist diese Vorrichtung insbesondere auch für passive Zugangssysteme geeignet.

Nach erfolgreicher Lokalisierung des Transponders kann realisiert werden, dass eine Wegfahrsperre nur entschärfbar ist und weitere Fahrzeugfunktionen nur freigebbar sind, wenn sich der Transponder im Fahrzeug befindet.. Bei Abfrage der Benutzeridentifikation und der Lage des Transponders in festgelegten Zeitabständen können Fahrzeugfunktionen auch selbsttätig geschaltet werden, wenn sich die Lage des Transponders verändert (Bsp.: Motor aus nach Verlassen des Fahrzeugs).

Die Erfindung wird im Folgenden kurz anhand eines Ausführungsbeispiels erläutert. Die zugehörige Figur zeigt ein Fahrzeug, welches mit der erfindungsgemäßen Vorrichtung ausgestattet ist.

Das dargestellte Fahrzeug 1 weist an sich bekannte Komponenten einer Zentralverriegelung 2 auf. Des Weiteren ist eine Empfangs-/Sendeeinheit 3 einer Wegfahrsperre vorgesehen und eine Ultraschall-Sende-/Empfangseinrichtung 4 einer Innenraumüberwachungsanlage im Dachbereich angeordnet. All diese Komponenten sind über Verbindungsleitungen mit einem Sicherheits-Steuergerät 5 verbunden. Dieses kommuniziert in nicht dargestellter Weise mit weiteren Steuergeräten des Fahrzeugs 1. So kann beispielsweise Alarm ausgelöst werden oder es kann eine Freischaltung der Motorfunktion (Wegfahrsperre) erfolgen.

Der potentielle Fahrzeugnutzer ist mit einem Transponder 6 ausgestattet, der, wie an sich bekannt, mit einer Sende-/Empfangseinheit ausgestattet ist und darüber mit der Empfangs-/Sendeeinheit 3 des Fahrzeugs 1 zur Benutzeridentifikation Signale 7 austauschen kann. Der Transponder 6 muss nicht zwingend aktiv bedient werden, sondern kann sich auch in der Tasche des Nutzers befinden.

Der Transponder 6 weist eine Ultraschall-Empfangseinrichtung auf, die von der Sende-/Empfangseinrichtung 4 abgegebene Ultraschallsignale 8 empfangen kann, wenn diese in ausreichend starkem Maße am Transponder 6 ankommen. Diese Signale 8 werden jedoch von der Fahrzeugkarosserie abgeschirmt. Die Stärke der Ultraschallsignale 8 und die Empfindlichkeit der transponderseitigen Empfangseinrichtung sind so aufeinander und auf die Fahrzeugausstattung abgestimmt, dass am Transponder 6 nur dann Ultraschallsignale 8 empfangbar sind, wenn er sich im Fahrzeuginnenraum befindet. Somit ist klar, dass sich der Transponder 6 im Innenraum des Fahrzeugs 1 befindet, wenn er ein Ultraschallsignal 8 empfängt. Die Information über ein empfangenes bzw. nicht empfangenes Ultraschall-Signal 8 wird in die Benutzer-Identifikationssignale 7 eingegliedert und damit an das Steuergerät 5 weitergeleitet. Positionsabhängige Freigaben/Sperrungen von Fahrzeugfunktionen können von mit dem Steuergerät 5 verbundenen Schalteinrichtungen erfolgen.

Bei anderer Ausführung der Erfindung könnten auch Ultraschallsignale vom Transponder 6 abgegeben werden. Diese sind dann je nach Position des Transponders 6 von der Ultraschall-Sende-/Empfangseinrichtung 4 empfangbar oder nicht, was in gewünschtem Sinne auswertbar ist.

Bei Nutzung der vorhandenen Sende-/Empfangseinrichtung 4 ist zur Realisierung der Erfindung ausschließlich die zusätzliche Anordnung einer Ultraschall-Sendeeinrichtung oder -Empfangseinrichtung im Transponder 6 notwendig. Mit diesem geringen Aufwand ist es möglich sowohl die sichere Benutzeridentifikation als auch die Positionsbestimmung des Transponders 6 durchzuführen.

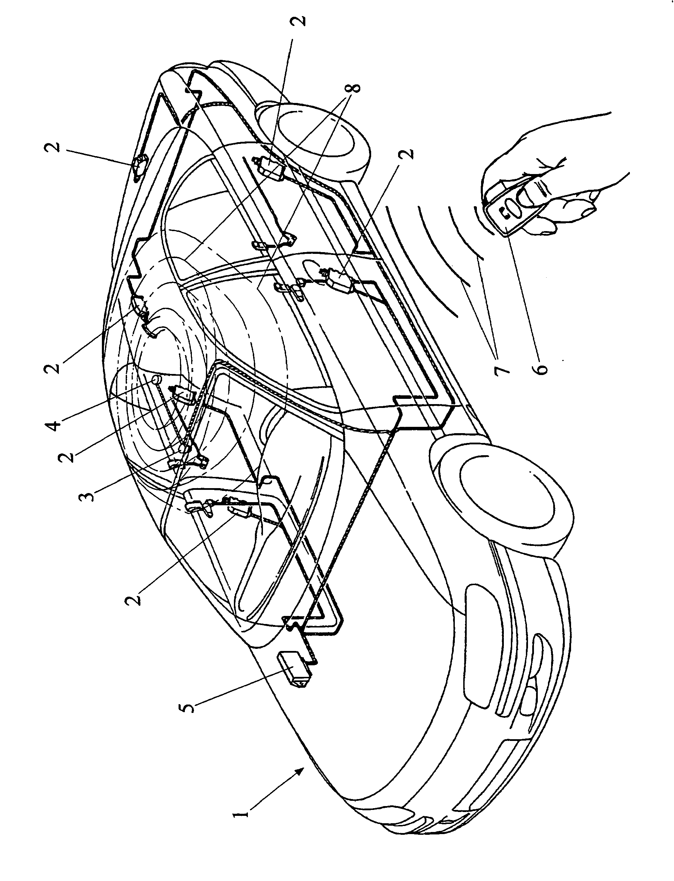

## Patentansprüche

1. Vorrichtung für Kraftfahrzeuge (1), mit einer in einem Transponder (6) angeordneten Funksende-/Empfangseinheit zur Transponder (6) -Fahrzeug (1) - Kommunikation zur Benutzeridentifikation und mit Mitteln zum Erkennen der Position des Transponders (6) - innerhalb oder außerhalb des Fahrzeugs (1) -, wobei eine Schalteinrichtung die Transponder-, Fahrzeug-, Kommunikation und/oder deren Wirkung in Abhängigkeit davon bestimmt, ob sich der Transponder (6) im Fahrzeuginnenraum oder außerhalb des Fahrzeugs (1) befindet,
**dadurch gekennzeichnet,**
**dass** im Fahrzeuginnenraum eine Ultraschall-Sendeeinrichtung (4) oder -Empfangseinrichtung (4) und am Transponder (6) eine Ultraschallempfangseinrichtung oder -Sendeeinrichtung vorgesehen ist, und dass die fahrzeug- oder transponderseitige Ultraschallempfangseinrichtung nur dann von der transponder- oder fahrzeugseitigen Ultraschall-Sendeeinrichtung (4) gesendete Signale (8) in ausreichend starkem Maße empfängt, wenn sich der Transponder (6) im Fahrzeuginnenraum befindet.

2. Vorrichtung nach Anspruch 1, **dadurch gekennzeichnet, dass** die Ultraschall-Sendeeinrichtung (4) oder - Empfangseinrichtung (4) im Fahrzeuginnenraum eine vorhandene Sende-/Empfangseinrichtung (4) einer Innenraumüberwachungsanlage ist.

3. Vorrichtung nach Anspruch 1 oder 2, **dadurch gekennzeichnet, dass** die von der Ultraschall-Sendeeinrichtung (4) ausgesendeten Signale kodierte Informationen enthalten.

4. Vorrichtung nach einem der Ansprüche 1 bis 3, **dadurch gekennzeichnet, dass** die Sendeleistung der Ultraschall-Sendeeinrichtung (4) einstellbar ist.

5. Vorrichtung nach einem der Ansprüche 1 bis 4, **dadurch gekennzeichnet, dass** die Ultraschall-Sendeeinrichtung (4) und -Empfangseinrichtung (4) bei Beginn der Transponder (6) -Fahrzeug (1) - Kommunikation aktiviert wird..

6. Vorrichtung nach einem der Ansprüche 1 bis 5, **dadurch gekennzeichnet, dass** eine Wegfahrsperre des Fahrzeugs (1) nach erfolgreicher Transponder (6) - Fahrzeug (1) -Kommunikation nur dann entschärfbar ist, wenn sich der Transponder (6) im Fahrzeuginnenraum befindet.

## Claims

1. An apparatus for motor vehicles (1), comprising a radio transmission/receiving unit arranged in a transponder (6) for communication between transponder (6) and vehicle (1) for user identification and means for recognizing the position of the transponder (6) inside or outside the vehicle (1), with a switching device determining the transponder and vehicle communication and/or their effect depending on whether the transponder (6) is located in the interior of the vehicle or outside of the vehicle (1), **characterized in that** in the interior of the vehicle an ultrasonic transmission device (4) or receiving device (4) and an ultrasonic receiving device or transmission device is provided on the transponder (6), and the ultrasonic receiving device on the vehicle or transponder side will receive signals (8) to a sufficiently strong extent as sent by the ultrasonic transmission device (4) on the transponder or vehicle side when the transponder (6) is located in the interior of the vehicle.

2. An apparatus according to claim 1, **characterized in that** the ultrasonic transmission device (4) or receiving device (4) in the interior of the vehicle is an existing transmission/receiving device (4) of an interior space monitoring system.

3. An apparatus according to claim 1 or 2, **characterized in that** the signals transmitted by the ultrasonic transmission device (4) contain encoded information.

4. An apparatus according to one of the claims 1 to 3, **characterized in that** the transmitting power of the ultrasonic transmission device (4) is adjustable.

5. An apparatus according to one of the claims 1 to 4, **characterized in that** the ultrasonic transmission device (4) and receiving device (4) is activated at the beginning of the communication between transponder (6) and vehicle (1).

6. An apparatus according to one of the claims 1 to 5, **characterized in that** an immobilizer of the vehicle (1) can only be deactivated after successful communication between transponder (6) and vehicle (1) when the transponder (6) is located in the interior of the vehicle.

## Revendications

1. Dispositif pour véhicules à moteur (1) avec une unité d'émetteur-récepteur radio disposée dans un transpondeur (6) pour la communication entre le transpondeur (6) et le véhicule (1) et avec des moyens pour reconnaître la position du transpondeur (6) à l'intérieur ou à l'extérieur du véhicule (1), dans lequel un dispositif de commutation détermine la communication entre le transpondeur et le véhicule et/ou son effet en fonction du fait que le transpondeur (6) se trouve à l'intérieur du véhicule ou à l'extérieur du véhicule (1),
**caractérisé en ce qu'**il est prévu à l'intérieur du véhicule un dispositif d'émission (4) ou de réception d'ultrasons (4) ou sur le transpondeur (6) un dispositif de réception ou d'émission d'ultrasons et **en ce que** le dispositif de réception d'ultrasons du côté du véhicule ou du transpondeur ne capte suffisamment les signaux (8) émis par le dispositif d'émission d'ultrasons (4) du côté du transpondeur ou du véhicule que lorsque le transpondeur (6) se trouve à l'intérieur du véhicule.

2. Dispositif selon la revendication 1, **caractérisé en ce que** le dispositif d'émission (4) ou de réception d'ultrasons (4) à l'intérieur du véhicule est un dispositif d'émission ou de réception (4) existant d'une installation de surveillance intérieure.

3. Dispositif selon la revendication 1 ou 2, **caractérisé en ce que** les signaux émis par le dispositif d'émission d'ultrasons contiennent des informations codées.

4. Dispositif selon l'une des revendications 1 à 3, **caractérisé en ce que** la puissance d'émission du dispositif d'émission d'ultrasons (4) est réglable

5. Dispositif selon l'une des revendications 1 à 4, **caractérisé en ce que** le dispositif d'émission (4) ou de réception d'ultrasons (4) est activé au début de la communication entre le transpondeur (6) et le véhicule (1).

6. Dispositif selon l'une des revendications 1 à 5, **caractérisé en ce qu'u**n antidémarrage du véhicule (1) ne peut être désarmé après la communication entre le transpondeur (6) et le véhicule (1) que si le transpondeur (6) se trouve à l'intérieur du véhicule.
